# EUROPÄISCHE PATENTANMELDUNG

(11) **EP 2 662 814 A1**
(43) Veröffentlichungstag der Anmeldung: **13.11.2013**
(21) Anmeldenummer: 13167157.0
(22) Anmeldetag: 08.05.2013
(51) Int. Cl.: G06Q 10/08

(54) **Verfahren zum Registrieren, Inventarisieren, Verwalten, Überprüfen und Überwachen von materiellen und immateriellen Gegenständen**

(30) Priorität: 09.05.2012 DE 102012104088
(71) Anmelder: Hörmann, Markus, 89281 Altenstadt / Illereichen (DE)
(72) Erfinder: Hörmann, Markus, 89281 Altenstadt / Illereichen (DE)
(74) Vertreter: Hutzelmann, Gerhard

(57) **Zusammenfassung**

Verfahren zum Registrieren, Inventarisieren, Verwalten, Überprüfen und Überwachen von materiellen und immateriellen Gegenständen, wobei eine Bestandserfassung vorgesehen ist, in die alle Gegenstände mit ihren Identifikationsdaten eingetragen werden.

## Beschreibung

Die Erfindung bezieht sich auf ein Verfahren zum Registrieren, Inventarisieren, Verwalten, Überprüfen und Überwachen von materiellen und immateriellen Gegenständen.

Viele Maschinen und andere Betriebseinrichtungen aber auch andere Gegenstände werden finanziert und müssen deswegen sicherungsübereignet werden.

Um diese Sicherungsübereignungen kontrollieren zu können, werden heute wiederkehrende Vor-Ort-Prüfungen durchgeführt, sogenannte Floor-Checks.

Diese Floor-Checks sind jedoch nicht nur zeit-, sondern vor allem kostenintensiv. Zudem besteht derzeit keine effektive Kontrolle von Doppel-Beleihungen. Anders als bei Kraftfahrzeugen gibt es für Maschinen und Anlagen keinen Fahrzeugbrief oder ein amtliches Register, wie es für Liegenschaften existiert.

Daher liegt der Erfindung die Aufgabe zugrunde, diese Probleme zu beseitigen und dabei auch die Überprüfungskosten zu senken.

Diese Aufgabe wird erfindungsgemäß dadurch gelöst, daß eine Bestandserfassung vorgesehen ist, in die alle Gegenstände mit ihren Identifikationsdaten eingetragen werden.

Dadurch wird eine umfassende Datenbasis geschaffen.

Sehr vorteilhaft ist es erfindungsgemäß auch, wenn jeder Gegenstand durch eine individuelle Kennzeichnung unterscheidbar und erfassbar gemacht wird.

Hiermit wird vermieden, daß Gegenstände doppelt erfasst werden. Die individuelle Kennzeichnung kann offen und/oder verdeckt angebracht sein.

Dabei ist es sehr vorteilhaft, wenn als Kennzeichnung eine optische oder elektronische Kennzeichnung, insbesondere ein QR-Code, ein RFID Transponder oder dergleichen angebracht wird.

Gerade RFID Kennzeichnungen können verdeckt, zum Beispiel hinter einem Typenschild angebracht werden.

Weiterhin hat es sich gemäß einer weiteren Ausgestaltung der Erfindung auch als sehr vorteilhaft erwiesen, wenn die Kennzeichnung aus- bzw. einlesbar ausgebildet ist, wobei auch eine Fernauslesung vorgesehen sein kann.

Dadurch kann sehr leicht die Identität eines jeden Gegenstandes festgestellt und überprüft werden. Eine Fernauslesung kann beispielsweise über eine Maschinensteuerung und über Internet erfolgen.

Sehr vorteilhaft ist es auch, wenn Zustandsdaten, Laufzeitdaten, Wartungsdaten, Ortsdaten, Bilder oder dergleichen ebenfalls erfassbar sind.

Dadurch können sehr viele, relevante Informationen über jeden Gegenstand ermittelt und abgeglichen werden. Insbesondere kann der Standort beispielsweise über GPS verifiziert werden.

Äußerst vorteilhaft ist es gemäß einer weiteren Ausgestaltung der Erfindung auch, wenn die Erfassung der Gegenstände mittels eines Lesegerätes erfolgt.

Ein Einsatz eines Lesegerätes kann sichtbare und unsichtbare Markierungen bzw. Identifikationsmerkmale erfassen.

Ebenfalls äußerst vorteilhaft ist es gemäß einer Fortbildung der Erfindung, wenn zusätzlich Finanzierungsdaten, Sicherungsübereignungsdaten, Finanzdaten, Eigentümerdaten, Versicherungsdaten, Schadensereignisse oder dergleichen erfasst und eingetragen werden.

Eine weitere sehr vorteilhafte Ausgestaltung der Erfindung liegt auch vor, wenn auf allen Datenebenen bei der Erfassung von Daten eine Dublettenprüfung durchgeführt wird.

Hierdurch können Doppel-Beleihungen oder dergleichen und auch gestohlene Gegenstände ermittelt werden. Zudem kann problemlos die Verbringung von Gegenständen und/oder deren ordnungsgemäße Instandhaltung erfasst werden. Maschinen und Gegenstände lassen sich so auch wieder auffinden. Vor allem wenn eine unsichtbare Identifikation angebracht ist, können auch Gegenstände wieder aufgefunden werden, die zum Beispiel Gegenstand eines Versicherungsfalls und verbracht worden sind.

Äußerst vorteilhaft ist es erfindungsgemäß auch, wenn verschiedene Zugangsebenen zur Datenbasis vorgesehen sind, die eine mißbräuchliche Nutzung unterbinden.

Hierdurch wird verhindert, daß Querverbindungen gezogen werden können. So kann zum Beispiel verhindert werden, daß aufgrund einer Beleihung oder Finanzierung von Maschinen auf die Bonität einer Firma geschlossen werden kann.

Erfindungsgemäß äußerst vorteilhaft ist es, wenn das Verfahren softwareimplementiert ist und auch als Online-Portal ausgeführt werden kann.

Hierdurch ist eine sehr einfache und anwenderfreundliche Anwendbarkeit gegeben, zumal die Anwender sicherlich nicht räumlich beieinander sein werden.

Im folgenden ist die Erfindung anhand eines Ausführungsbeispiels veranschaulicht.

Viele Maschinen und Anlagen in Firmen werden finanziert oder dienen als Sicherheit bei der Aufnahme von Krediten.

Die Finanzierer bzw. Darlehensgeber haben ein berechtigtes Interesse daran, daß diese entsprechende Sicherheiten für ihr finanzielles Engagement erhalten.

Hierzu werden diese Maschinen und Anlagen, aber auch andere Gegenstände an die Geldgeber sicherungsübereignet.

Für die Geldgeber ist es in der Regel derzeit schlicht unmöglich, zu prüfen, ob eine Maschine oder Anlage bereits Gegenstand einer aktuellen, also noch andauernden Sicherungsübereignung ist und ob die Maschine bzw. Anlage sich im Eigentum des Pfandgebers befindet.

Anders als für Kraftfahrzeuge oder Immobilien gibt es hier keine amtlichen Dokumente, die zur Sicherstellung genutzt werden könnten. Ein Fahrzeugbrief oder Grundbuchauszug ist einfach nicht existent.

Deswegen wurden bislang über sogenannte Floor-Checks, also durch ausgesuchte Prüfer durchgeführte Überprüfungen vor Ort wenigstens festgestellt, ob die sicherungsübereignete Maschine bzw. Anlage am angegebenen Ort steht.

Nicht überprüft werden kann jedoch, ob die Maschine bzw. Anlage bereits anderweitig sicherungsübereignet ist oder wer Eigentümer bzw. Besitzer ist.

Zudem sind diese Floor-Checks nicht nur personal- und zeitintensiv, sondern verursachen auch erhebliche Kosten.

Um eine hinreichende Sicherheit zu gewährleisten, müssen derzeit die Floor-Checks mehrmals jährlich durchgeführt werden.

Mit dem erfindungsgemäßen Verfahren ist es möglich, nicht nur die Sicherheit für den Darslehensgeber zu erhöhen, sondern auch die Kosten drastisch zu reduzieren.

Hierzu werden alle zu belastenden Gegenstände, also vornehmlich Maschinen und Anlagen individuell gekennzeichnet und in ein Register eingetragen.

Die individuelle Kennzeichnung kann dabei optisch, zum Beispiel durch Anbringen einer Seriennummer, eines Codes (QR-Code oder dergleichen), oder elektronisch, zum Beispiel durch Anbringen eines RFID Tags vorgenommen werden. Bei einer elektronischen Kennzeichnung kann diese sichtbar und unsichtbar vorgenommen werden. So ist es denkbar, daß ein RFID Tag hinter einem Typenschild angebracht wird und so normal nicht sichtbar ist. Auch an anderen Stellen kann eine solche verdeckte Kennzeichnung erfolgen, wobei diese auch bereits vom Hersteller vorgesehen werden kann.

Auch eine Kennzeichnung mit künstlicher DNA oder dergleichen ist möglich.

Immaterielle Gegenstände werden selbstverständlich nur hinsichtlich aller verfügbaren Daten erfasst. Eine zusätzliche Kennzeichnung ist dort in der Regel nicht anbringbar.

Mit dieser Kennzeichnung wird der jeweilige Gegenstand in das Register eingetragen. Zusätzlich können in das Register Bestandsdaten zu jedem Gegenstand aufgenommen werden. Zum Beispiel technische Daten, Wartungsdaten, Besitz- und Eigentumsdaten, Ortsdaten, Sicherungsübereignungen, Versicherungsdaten, Schadensereignisse und dergleichen.

Wird nun ein Gegenstand für eine Sicherungsübereignung genutzt, wird dies vermerkt. Soll derselbe Gegenstand nochmals für eine weitere Sicherungsübereignung genutzt werden, so kann dies erkannt werden. Bei Beendigung einer Sicherungsübereignung wird diese selbstverständlich ebenso vermerkt. Zugleich kann auch bei jeder Überprüfung festgestellt werden, ob Mehrfachversicherungen oder noch unerledigte Schadensereignisse vorliegen. Schadensereignisse werden in der Regel Diebstahl, Entwendung und Unterschlagung betreffen, können aber auch andere Sachverhalte erfassen.

Wird nun eine Überprüfung angesetzt, braucht diese nicht mehr als Floor-Check durchgeführt werden, sondern es kann ein Lesegerät für die individuellen Markierungen an den Besitzer des Gegenstandes gesandt werden, der dann die Markierungen einliest und das Lesegerät wieder zurückschickt.

Hierdurch wird das Vorhandensein des Gegenstandes überprüft. Auf den Floor-Check kann deswegen oftmals verzichtet werden. Diese kurze Feststellung des Vorhandenseins wird im folgenden als Quick-Check bezeichnet.

Bei einem solchen Quick-Check kann nicht nur die individuelle Kennzeichnung ausgelesen werden, sondern es ist auch denkbar, daß zugleich auch Standortdaten, Wartungsdaten, Betriebsdaten, Bilder oder dergleichen erfasst werden.

So kann nicht nur die Existenz festgestellt werden, sondern es können auch Rückschlüsse auf den Zustand und eine ordnungsgemäße Instandhaltung gezogen werden.

Je nach Ergebnis des jeweiligen Quick-Checks kann die Häufigkeit der Floor-Checks beeinflusst werden.

Desweiteren ist eine Fernauslesung zum Beispiel über Internet oder über Telemetriemodule denkbar. Durch solch eine Fernauslesung können beispielsweise auch verbrachte Gegenstände und Maschinen wieder aufgefunden werden.

Wenn nun eine Maschine oder Anlage finanziert wird, wird dies entsprechend eingetragen. Vor allem kann nicht nur die Finanzierungshöhe, sondern auch die Finanzierungsdauer vermerkt werden.

Kurz vor Ende des Finanzierungszeitraumes kann auch dies angezeigt werden.

Im Falle einer Insolvenz, eines Diebstahles oder auch eines Verkaufes der jeweiligen Maschine wird dies ebenfalls vermerkt.

Soll nun eine Maschine neu finanziert bzw. beliehen oder auch versichert werden, kann der derzeitige Status abgefragt werden.

Zur Sicherstellung der Vertraulichkeit aller Daten wird der Zugriff reglementiert. Nur mit den entsprechenden Berechtigungen können Daten abgefragt werden.

Mit dem erfindungsgemäßen Verfahren werden nicht nur Mehrfach-Finanzierungen und die damit verbundenen Doppel- oder Mehrfach-Sicherungsübereignungen ausgeschlossen, sondern auch Verluste und Ausfälle auf Seiten der Finanzierer verhindert. Problemfälle werden frühzeitig aufgedeckt.

Andererseits bietet das erfindungsgemäße Verfahren auch für den Sicherungsgeber, d.h. für den Kreditnehmer oder dergleichen erhebliche Vorteile. So kann er kurz vor dem Ablauf von bestehenden Finanzierungen vorgewarnt werden, um rechtzeitig Refinanzierungen in die Wege leiten zu können. Zudem hat er jederzeit Finanzierungen und deren Laufzeiten im Blick,

Durch die Durchführung von Quick-Checks als Ersatz von Floor-Checks werden vom Sicherungsgeber zu tragende Kosten reduziert. In der Regel können 2-3 Floor-Checks durch Quick-Checks ersetzt werden.

Zudem ist es möglich, im Falle von Zahlungsschwierigkeiten die rechtzeitige Sicherstellung der Gegenstände einzuleiten. Durch die Zusammenfassung aller hierzu notwendigen Informationen werden Koordinations- und Abwicklungsaufwand reduziert.

Die im Register erfassten Daten können in die Daten der Finanzierer, die Daten der Versicherer, die Daten der Kreditnehmer und die Maschinendaten unterteilt werden. Damit wird eine weitere Sicherheit gegen unerwünschte Querverbindungen gewährleistet. Die Daten der Kreditnehmer können dabei auch anonymisiert erfasst sein.

Der Zugriff auf das Register kann über Abonnements, Einzelzugriffe und dergleichen abgewickelt werden.

## Patentansprüche

1. Verfahren zum Registrieren, Inventarisieren, Verwalten, Überprüfen und Überwachen von materiellen und immateriellen Gegenständen, **dadurch gekennzeichnet, daß** eine Bestandserfassung vorgesehen ist, in die alle Gegenstände mit ihren Identifikationsdaten eingetragen werden.

2. Verfahren nach Anspruch 1, **dadurch gekennzeichnet, daß** jeder Gegenstand durch eine individuelle Kennzeichnung unterscheidbar und erfassbar gemacht wird.

3. Verfahren nach Anspruch 2, **dadurch gekennzeichnet, daß** als Kennzeichnung eine optische oder elektronische Kennzeichnung, insbesondere ein QR-Code ein RFID-Transponder oder dergleichen angebracht wird.

4. Verfahren nach einem der vorangehenden Ansprüche, **dadurch gekennzeichnet, daß** die Kennzeichnung aus- bzw. einlesbar ausgebildet ist, wobei auch eine Fernauslesung vorgesehen sein kann.

5. Verfahren nach einem der vorangehenden Ansprüche, **dadurch gekennzeichnet, daß** Zustandsdaten, Laufzeitdaten, Wartungsdaten, Ortsdaten, Bilder oder dergleichen erfasst werden und ebenfalls erfassbar sind.

6. Verfahren nach einem der vorangehenden Ansprüche, **dadurch gekennzeichnet, daß** die Erfassung der Gegenstände mittels eines Lesegerätes erfolgt.

7. Verfahren nach einem der vorangehenden Ansprüche, **dadurch gekennzeichnet, daß** zusätzlich Finanzierungsdaten, Sicherungsübereignungsdaten, Finanzdaten, Eigentümerdaten, Versicherungsdaten, Schadensereignisse oder dergleichen erfasst und eingetragen werden.

8. Verfahren nach einem der vorangehenden Ansprüche, **dadurch gekennzeichnet, daß** auf allen Datenebenen bei der Erfassung von Daten eine Dublettenprüfung durchgeführt wird.

9. Verfahren nach einem der vorangehenden Ansprüche, **dadurch gekennzeichnet, daß** verschiedene Zugangsebenen zur Datenbasis vorgesehen sind, die eine mißbräuchliche Nutzung unterbinden.

10. Verfahren nach einem der vorangehenden Ansprüche, **dadurch gekennzeichnet, daß** das Verfahren softwareimplementiert ist und auch als Online-Portal ausgeführt werden kann.
